# EUROPÄISCHE PATENTSCHRIFT

(11) **EP 1 525 460 B1**
(45) Veröffentlichungstag und Bekanntmachung des Hinweises auf die Patenterteilung: **19.11.2008**
(21) Anmeldenummer: 03771059.7
(22) Anmeldetag: 18.07.2003
(51) Int. Cl.: G01N 27/28

(54) **VORRICHTUNG UND VERFAHRENT ZUR DRUCKERZEUGUNG IM ELECTROLYTEN EINER BEZUGSELEKTRONE**
DEVICE AND METHOD FOR GENERATING PRESSURE IN THE ELECTROLYTES OF A REFERENCE ELECTRODE
DISPOSITIF ET PROCEDE DE PRODUCTION DE PRESSION DANS L'ELECTROLYTE D'UNE ELECTRODE DE REFERENCE

(30) Priorität: 25.07.2002 DE 10233905
(43) Veröffentlichungstag der Anmeldung: 27.04.2005
(73) Patentinhaber: Testo AG, 79853 Lenzkirch (DE)
(72) Erfinder: DERR, Andreas, 79793 Wutöschingen (DE)
(74) Vertreter: Schmuckermaier, Bernhard
(86) Internationale Anmeldenummer: PCT/EP2003/007886
(87) Internationale Veröffentlichungsnummer: WO 2004/011920

(56) Entgegenhaltungen:
- EP-A- 0 399 101
- EP-A- 0 414 033
- WO-A-01/75430
- DE-A- 19 639 372

## Beschreibung

Die Erfindung ist auf dem Gebiet der Messtechnik anwendbar und zwar bei der Messung von Ladungsträgerkonzentrationen in Flüssigkeiten oder an Festkörpern. Insbesondere findet die Erfindung Anwendung bei der Messung eines ph-Wertes.

Die Erfindung bezieht sich auf eine Messsonde zur Messung einer Ladungsträgerkonzentration, insbesondere des ph-Wertes einer Messsubstanz, mit einer Glaselektrode, die einen ersten Elektrolyten sowie eine Messelektrode enthält und mit einem Behälter, der einen zweiten Elektrolyten enthält, welcher mit der Glaselektrode einerseits und mit einer Bezugselektrode andererseits in Verbindung steht, wobei der Behälter eine Diaphragmaöffnung aufweist, mittels dessen der zweite Elektrolyt mit der Messsubstanz in Verbindung treten kann.

Als ph-Wert wird der negative dekadische Logarithmus der H⁺ - Ionenkonzentration (Protonenkonzentration) in einer Flüssigkeit bezeichnet. Diese Wasserstoffionenkonzentration lässt sich durch Zugabe von Basen oder Säuren zu Wasser in weiten Grenzen verändern. Der Messwert des ph gibt Aufschluss über die Stärke der Säure beziehungsweise Base.

Der ph-Wert kann außer durch bekannte chemisch sensitive Farbindikatoren auch potentiometrisch gemessen werden. Es sind verschiedene Standardelektroden bekannt, deren Elektrodenspannung gegenüber einer Bezugselektrode unter dem Einfluss einer Messsubstanz in einen gemessenen ph-Wert umgerechnet werden kann.

Eine bekannte labortechnisch angewandte Elektrode ist beispielsweise die Wasserstoffelektrode. In der Praxis und im Feldeinsatz hat sich dagegen die sogenannte Glaselektrode weithin bewährt wegen ihrer Robustheit. Eine derartige Glaselektrode weist prinzipiell einen Glasbehälter auf, dessen Glasaußenwand als Membrane ausgebildet ist und der in seinen Inneren einen ersten Elektrolyten enthält. In diesem ersten Elektrolyten befindet sich die sogenannte Mess- oder Ableitelektrode, deren Potential gegenüber einer Bezugselektrode gemessen wird. Die Bezugselektrode liegt außerhalb des Glasbehälters in einen zweiten Elektrolyten eingebettet, der mit der Glasmembran einerseits und mit der zu vermessenden Substanz über ein Diaphragma andererseits in Verbindung steht.

Das Diaphragma muss so gewählt werden, dass einerseits die Messsubstanz in diesem Bereich mit dem zweiten Elektrolyten in Verbindung treten kann, dass andererseits der zweite Elektrolyt durch das Diaphragma nicht zur Gänze austritt. Ist der zweite Elektrolyt leicht flüssig, so muss darauf geachtet werden, dass er durch das Diaphragma nicht ausfließt. Das Diaphragma kann dann als poröse Membran ausgebildet sein. Bei schwerflüssigen beziehungsweise gelartigen Elektrolyten ist dieses Problem verringert und solche Elektroden können auch in verschiedenen Messpositionen eingesetzt werden, ohne dass der zweite Elektrolyt austritt. Das Diaphragma kann dann größere Öffnungen aufweisen oder als Öffnung ausgebildet sein.

Dabei ergibt sich jedoch das Problem, dass die Messsubstanz, die bei jedem Messvorgang mit dem zweiten Elektrolyten in Verbindung tritt, diesen kontaminiert und dort in Resten verbleibt. Auch nimmt in dem zweiten Elektrolyten die CL⁻ (Chlor)-Ionenkonzentration durch oft durchgeführte Messvorgänge langsam ab.
Aus der US-Patentschrift 2002027074 ist eine Messsonde zur Messung von ph-Werten bekannt, die eine Messelektrode, eine Bezugselektrode und einen zweiten Elektrolyten in Form eines Gels aufweist. Der zweite Elektrolyt ist in einem Behälter angeordnet, der ein Diaphragma in Form einer Öffnung aufweist, an der der gelförmige Elektrolyt nach außen mit einer Messsubstanz in Kontakt treten kann. Die Messelektrode ist ein ionensensitiver Feldeffekttransistor. Die Messsonde kann beispielsweise zur Messung des ph-Wertes von Reiskörnern genutzt werden, um deren Alter zu bestimmen.

Aus der europäischen Patentanmeldung Nr. 0922955 ist eine Messsonde bekannt mit einer ionenselektiven Glaselektrode, die ebenfalls mit einem Feldeffekttransistor gekoppelt ist.

Aus der deutschen Offenlegungsschrift 19857953 ist ebenfalls eine ph-Messsonde bekannt, bei der das Potential der Messelektrode mittels eines ionensensitiven Feldeffekttransistors verarbeitet wird. Dort steht ein Elektrolyt mittels eines Diaphragmas mit einer Messflüssigkeit in Verbindung. Weitere Messsonden sind beispielsweise in der DE 196 39 372 A1 und der WO 01/75430 A2 beschrieben.

Der Erfindung liegt die Aufgabe zugrunde, bei einer Messsonde der eingangs genannten Art die mögliche Einsatzdauer bei gleichbleibender Messqualität möglichst zu verlängern oder eine Möglichkeit zu schaffen, eine derartige Messsonde mit geringem Aufwand weiterverwendbar zu machen.

Die Aufgabe wird gemäß Anspruch 1 dadurch gelöst, dass der Behälter eine Pumpeinrichtung zur Beförderung einer Menge des zweiten Elektrolyten in das Innere des Behälters aufweist.

Die Pumpeinrichtung kann eine bestimmte Menge des zweiten Elektrolyten in das Innere des Behälters befördern, so dass eine überschüssige Menge aus der Diaphragmaöffnung des austritt. Diese austretende Menge des zweiten Elektrolyten fließt entweder ab oder kann außen an der Messsonde entfernt werden, so dass an dem Diaphragma für nachfolgende Messungen der zweite Elektrolyt in unverbraüchter Form zur Verfügung steht. Auch Verschmutzungen werden durch den austretenden zweiten Elektrolyten aus der Diaphragmaöffnung mit ausgeschwemmt.

Die Erfindung sieht vor, dass der Behälter im Bereich seiner Wand einen mit dem zweiten Elektrolyten gefüllten Kanal aufweist, in den ein Körper einschiebbar ist, um wenigstens einen Teil des in dem Kanal befindlichen zweiten Elektrolyten in das Innere des Behälters zu befördern.

Erfindungsgemäß ist eine Antriebseinrichtung vorgesehen , die eine Verschiebung des Körpers zum Inneren des Behälters bewirkt und dass die Antriebseinrichtung zum Nachfüllen des zweiten Elektrolyten von dem Körper entkoppelbar ist.

Dadurch, dass die Antriebseinrichtung zum Nachfüllen des zweiten Elektrolyten von dem Körper entkoppelbar ist, ist es beispielsweise möglich, den zweiten Elektrolyten unter Druck in den Behälter einzuspritzen und dadurch den Körper in dem Kanal durch den hydrostatischen Druck des zweiten Elektrolyten in seine Ausgangsposition zurückzutreiben.

Eine besonders einfache konstruktive Ausgestaltung der Erfindung besteht darin, dass der Körper ein Kolben ist, der in einem Hohlzylinder gleitet und dass die Antriebseinrichtung mit einer Schraube gebildet ist.

Durch die Verwendung einer Schraube kann die Antriebseinrichtung ohne größere Kraftanwendung betrieben werden, da hierdurch eine starke Untersetzung stattfindet. Das zu verdrängende Volumen in dem Behälter ist jedoch wegen der üblicherweise geringen Ausdehnungen der Diaphragmaöffnung sehr gering, so dass der Kolben keinen langen Weg zurücklegen muss.

Besonders vorteilhaft wird die Antriebseinrichtung derart gestaltet, dass die Achse der Schraube senkrecht zu der Achse des Hohlzylinders verläuft und dass die Schraube an ihrer Spitze einen Konus aufweist, an dem der Kolben abgestützt ist und dessen Verschiebung in Richtung der Achse der Schraube durch Keilwirkung eine Verschiebung des Kolbens bewirkt.

Dadurch ist nur eine besonders geringe Kraftanwendung bei der Betätigung der Schraube zum Antrieb des Kolbens notwendig und der Vorschub des Kolbens kann besonders genau dosiert werden, um gerade so viel von dem zweiten Elektrolyten durch die Diaphragmaöffnung hindurchzudrücken, dass eine ausreichende Reinigung des Diaphragmas und Erneuerung des zweiten Elektrolyten stattfindet.

Um die Messsonde dauerhaft betreiben zu können, muss wiederholt eine Menge des zweiten Elektrolyten in den Füllkanal nachfüllbar sein. Zu diesem Zweck erweist es sich als sinnvoll, dass der Füllkanal mit einem außen verschließbaren Speisekanal verbunden ist, durch den der Messsonde der zweite Elektrolyt zugeführt werden kann.

In diesem Fall kann der Körper mindestens einmal in den Behälter eingeschoben werden, um eine Menge des zweiten Elektrolyten zu verdrängen oder in den Behälter hineinzubefördern und danach kann beim Zurückziehen des Körpers durch den Speisekanal eine Menge des zweiten Elektrolyten in den Füllkanal und von dort in den Behälter nachbefördert werden.

Die erfindungsgemäße Konstruktion der Messsonde erweist sich besonders dann als vorteilhaft, wenn der zweite Elektrolyt durch ein Gel gebildet ist. Dann ist gewährleistet, dass die Messsonde sich in jeder Position betreiben lässt, ohne dass eine Menge des zweiten Elektrolyten durch die Öffnung des Diaphragmas austritt. Dennoch weist das Gel als Elektrolyt alle notwendigen Eigenschaften für die Ionenleitung in einer ph-Messsonde auf. Es ist neben der Verwendung thixiotroper Stoffe (Gele) auch denkbar, schwer flüssige oder zähflüssige Stoffe zu verwenden, die nicht ohne weiteres aus der Diaphragmaöffnung austreten,sowie solche Stoffe, die durch die Oberflächenspannung am Austritt durch die Diaphragmaöffnung gehindert sind.

Im folgenden wird die Erfindung anhand eines Ausführungsbeispiels in einer Zeichnung gezeigt und nachfolgend beschrieben. Dabei zeigt
Figur 1 eine erfindungsgemäße Messsonde schematisch im Längsschnitt,
Figur 2 einen vergrößerten Ausschnitt aus der Figur 1, der dort mit a bezeichnet ist,
Figur 3 einen vergrößerten Ausschnitt aus der Figur 1, der dort mit b bezeichnet ist, wobei die Phase dargestellt ist, in der der zweite Elektolyt verdrängt wird,
Figur 4 denselben Ausschnitt wie Figur 3, wobei die Phase dargestellt ist, in der eine Menge des zweiten Elektrolyten nachgefüllt wird.

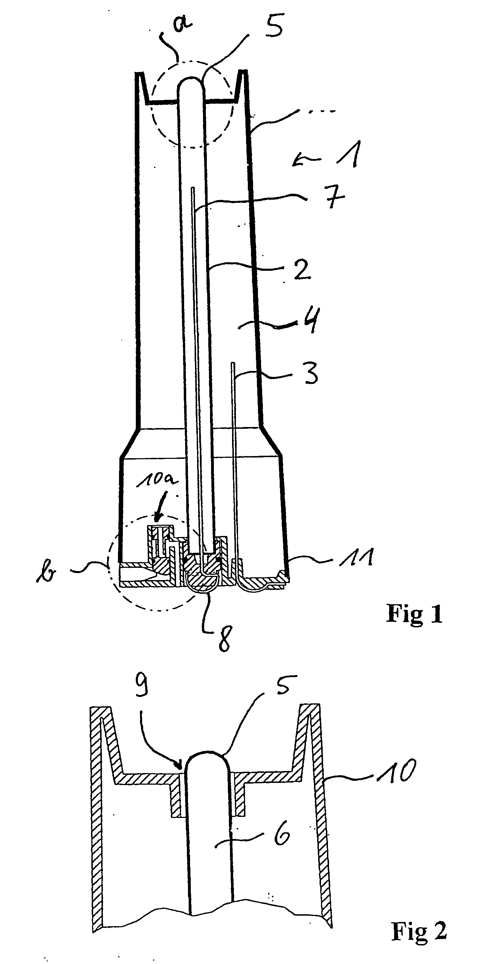

Die Figur 1 zeigt eine Messsonde 1, die eine innenliegende Glaselektrode 2 sowie eine außerhalb der Glaselektrode 2 liegende Bezugselektrode 3 aufweist. Die Bezugselektrode 3 ist in einen zweiten Elektrolyten in Form eines Polymerelektrolyten 4 eingebettet, der als Gel vorliegt.

Die Glaselektrode 2 weist ein Diaphragma mit Poren auf, das durch die Glaswand des Glaskolbens 5 gebildet ist. In dem Glaskolben 5 ist ein erster Elektrolyt 6 beispielsweise in Form einer Flüssigkeit angeordnet. In diesem ersten Elektrolyten ist die Messelektrode 7 angeordnet, die zur Ableitung des Messwertes in Form einer Spannung an ihrem sockelseitigen Ende 8 dient.

Derartige Messsonden sind, wie dargestellt, im Handel bereits erhältlich und werden mit einem gelartigen Polymerelektrolyten als zweiten Elektrolyten insbesondere in der Lebensmitteltechnik zur ph-Messung bei Festkörpern eingesetzt, da sie einerseits robust sind und andererseits vielfältigen Einsatz erlauben ohne dass auf die Lage der Sonde bei der Messung geachtet zu werden braucht, da keine Gefahr für das Austreten des als Gel vorliegenden Polymerelektrolyten 4 besteht.

Der Polymerelektrolyt 4 kann durch eine Diaphragmaöffnung 9, die zwischen dem Glaskolben 5 und der Gehäusewand 10 der Messsonde gebildet ist, mit einer Messsubstanz außerhalb der Messsonde in Kontakt treten. Durch einen solchen Kontakt ändern sich, wenn die Messsubstanz Ionen enthält, die potentiometrischen Verhältnisse in der Messsonde, so dass über eine zwischen der Messelektrode 7 und der Bezugselektrode 3 hochohmig gemessene potentiometrische Spannung der ph-Wert der Messsubstanz errechnet oder mittels Referenzwerten ermittelt werden kann.

Die Verwendung eines gelartigen zweiten Elektrolyten 4 bringt einerseits Vorteile, da eine relativ große Diaphragmaöffnung 9 verwendet werden kann, die durch mikroskopische Verunreinigungen kaum verstopft, wie dies bei feinporigen Diaphragmen geschehen kann, insbesondere wenn eiweißhaltige Substanzen vermessen werden.

Andererseits können dennoch durch die Diaphragmaöffnung 9 Verunreinigungen in den gelartigen Polymerelektrolyten gelangen sowie Keime, die sich dort vermehren können und es können auch Lufteinschlüsse entstehen, die nachfolgende Messungen verfälschen können.

Es ist versucht worden, derartige Messsonden dadurch zu regenerieren, dass sie mit heißem Wasser behandelt werden, wodurch der zweite Elektrolyt aufquillt und sich teilweise aus der Diaphragmaöffnung 9 herausschiebt.

Dies ist jedoch mit üblichen Messsonden wegen der komplizierten mit ihnen verbundenen Elektronik nicht möglich und außerdem nimmt durch die mit einer solchen Reinigung verbundene Wasseraufnahme die Chlor-Ionenkonzentration in dem Gel und die Masse des Polymerelektrolyten ab. In entstehenden Lufteinschlüssen können sich insbesondere Verschmutzungen und Keime sammeln und vermehren. Dies hat zur Folge, dass bei nachfolgenden Messungen die Messsubstanz weiter durch die Diaphragmaöffnung 9 zum Inneren des Behälters der Sonde eindringen muss, bevor eine genaue Messung ermöglicht ist. Die Ansprechzeit der Sonde wird hierdurch verlängert.

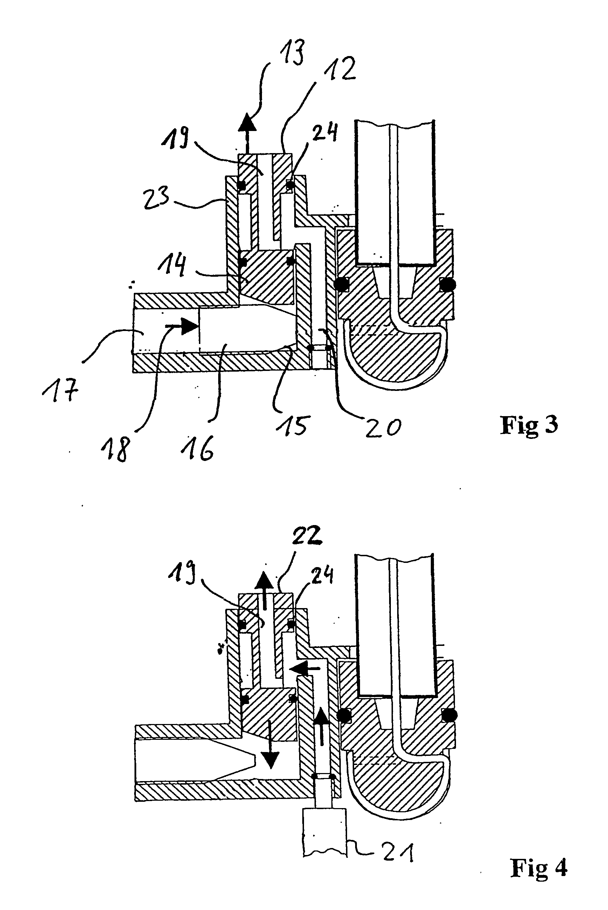

Bei der hier vorliegenden erfindungsgemäßen Sonde ist das Problem der Reinigung dadurch gelöst, dass eine Pumpeinrichtung für das Gel vorgesehen ist, die am Sockel 11 der Messsonde 1 angeordnet ist und die in den Figuren 3 und 4 näher gezeigt ist.

Die Figur 3 zeigt einen Kolben 12, der, wie durch den Pfeil 13 angedeutet ist, mittels eines Antriebskeils 14 unter der Wirkung des Konus 15 einer Antriebsschraube 16 nach oben zum Inneren des Behälters 10 schiebbar ist. Im Inneren des Behälters 10 verdrängt der Kolben 12 damit etwas von dem zweiten Elektrolyten 4, so dass sich eine gewisse Menge des zweiten Elektolyten, der als Polymerelektrolyt vorliegt, durch die Öffnung 9 des Diaphragmas aus der Messsonde herausschiebt und dort entfernt werden kann.

Dies geschieht dadurch, dass die Antriebsschraube 16 in einem Gewinde innerhalb des Kanals 17 durch eine Schraubbewegung in Richtung des Pfeils 18 angetrieben wird.

Die beschriebene Pumpeinrichtung würde an sich nur eine einmalige Bewegung des Kolbens 12 erlauben, wobei jedoch denkbar ist, dass diese Schubbewegung in mehrere Schritte geteilt werden kann, wobei nach jeder Messung der Kolben 12 ein Stück weit weiter bewegt wird, um die Messsonde zu reinigen.

Es ist jedoch vorteilhaft, in dem Kolben 12 einen Füllkanal 19 vorzusehen, der dazu dienen kann, durch einen Speisekanal 20 etwas von dem zweiten Elektrolyten, dem Polymerelektrolyten, in den Behälter 10 aus einem Behälter 21, der nur schematisch in der Figur 4 dargestellt ist, nachzufüllen. Alternativ zu der abgebildeten Variante kann der Füllkanal auch in dem mit 24 bezeichneten Bereich zwischen dem Kolben 12 und der Behälterwand vorgesehen sein

Wird durch den Speisekanal 20 etwas von dem Polymerelektrolyten in den Füllkanal 19 hineingedrückt, so gelangt diese Menge in das Innere des Behälters 10 und zwar im Bereich der Stirnfläche 22 des Kolbens 12. Der hier einströmende zweite Polymerelekrolyt drängt den Kolben 12 entgegen der durch den Pfeil 13 dargestellten Richtung zurück, wenn die Schraube 16 in dem Kanal 17 durch Zurückschrauben entgegen der durch den Pfeil 18 dargestellten Richtung wegbewegt worden ist. Vorteilhaft hierbei ist, dass der zweite Elektrolyt 4 genau in den Bereich eingebracht wird, aus dem der Kolben 12 zurückbewegt wird, so dass keine Lufteinschlüsse entstehen können.

Nach dem Nachfüllen des zweiten Elektrolyten kann die Speiseleitung 20 mit einem Schraubdeckel verschlossen werden und darauf steht die Pumpeinrichtung für einen neuen Reinigungsvorgang der Messsonde bereit.

## Patentansprüche

1. Messsonde (1) zur Messung einer Ladungsträgerkonzentration, insbesondere des ph-Wertes einer Messsubstanz, mit einer Glaselektrode (2), die einen ersten Elektrolyten (6) sowie eine Messelektrode (7) enthält und mit einem Behälter (10), der einen zweiten Elektrolyten (4) enthält, welcher mit der Glaselektrode (2) einerseits und mit einer Bezugselektrode (3) andererseits in Verbindung steht, wobei der Behälter eine Diaphragmaöffnung aufweist, mittels deren der zweite Elektrolyt (4) mit der Messsubstanz in Verbindung treten kann, **dadurch gekennzeichnet, dass** der Behälter eine Pumpeinrichtung (12, 14, 16) zur Beförderung einer Menge des zweiten Elektrolyten (4) in das Innere des Behälters (10) aufweist, wobei
der Behälter (10) im Bereich seiner Wand einen mit dem zweiten Elektrolyten gefüllten Kanal aufweist, in den ein Körper einschiebbar ist, um wenigstens einen Teil des in dem Kanal befindlichen zweiten Elektrolyten in das Innere des Behälters zu befördern,
**dadurch gekennzeichnet, dass** eine Antriebseinrichtung (15, 16) vorgesehen ist, die eine Verschiebung des Körpers (12) zum Inneren des Behälters (10) bewirkt und dass die Antriebseinrichtung zum Nachfüllen des zweiten Elektrolyten (4) von dem Körper (12) entkoppelbar ist.

2. Messsonde (1) nach Anspruch 1, **dadurch gekennzeichnet,**
**dass** der Körper (12) aus dem Inneren des Behälters (10) wenigstens teilweise zurückziehbar ist und dass ein Füllkanal (19) vorgesehen ist, durch den eine Menge des zweiten Elektrolyten (4) an einer dem Inneren des Behälters zugewandten Seite des Körpers (12) einbringbar ist.

3. Messsonde (1) nach Anspruch 2, **dadurch gekennzeichnet,**
**dass** der Füllkanal (12) durch das Innere des Körpers verläuft.

4. Messsonde (1) nach Anspruch 2, **dadurch gekennzeichnet, dass** der Füllkanal zwischen dem Körper (12) und der Wand des Behälters (10) gebildet ist.

5. Messsonde (1) nach Anspruch 1, **dadurch gekennzeichnet, dass** der Körper (12) ein Kolben ist, der in einem Hohlzylinder (23) gleitet und dass die Antriebseinrichtung (15, 16) mit einer Schraube (16) gebildet ist.

6. Messsonde (1) nach Anspruch 5, **dadurch gekennzeichnet, dass** die Achse der Schraube (16) senkrecht zu der Achse des Hohlzylinders (23) verläuft und dass die Schraube (16) an ihrer Spitze einen Konus (15) aufweist, an dem der Kolben (12) abgestützt ist und dessen Verschiebung in Richtung der Achse der Schraube (16) durch Keilwirkung eine Verschiebung des Kolbens (12) bewirkt.

7. Messsonde (1) nach Anspruch 5 und 3, **dadurch gekennzeichnet, dass** der Füllkanal (19) mit einem außen verschließbaren Speisekanal (20) verbunden ist, durch den der Messsonde der zweite Elektrolyt (4) zugeführt werden kann.

8. Messsonde (1) nach einem der vorangehenden Ansprüche,
**dadurch gekennzeichnet, dass** der zweite Elektrolyt (4) ein Gel ist.

9. Verfahren zum Betrieb einer Messsonde (1) nach einem der vorangehenden Patentansprüche, **dadurch gekennzeichnet, dass** bedarfsweise vor einer Messung entweder eine Menge des zweiten Elektrolyten (4) in das Innere des Behälters (10) befördert oder eine dort befindliche Menge des zweiten Elektrolyten (4) verdrängt wird mit der Folge, dass etwas von dem zweiten Elektrolyten durch die Diaphragmaöffnung (9) aus dem Behälter (10) austritt.

## Claims

1. Measuring probe (1) for measuring a charge carrier concentration, in particular the pH value of a measurement substance, with a glass electrode (2) which contains a first electrolyte (6) as well as a meter electrode (7), and with a container (10) which contains a second electrolyte (4), which is in contact with the glass electrode (2) on the one hand and to a reference electrode (3) on the other hand, wherein the container has a diaphragm opening, by means of which the second electrolyte (4) can come into contact with the measurement substance,
**characterised in that**
the container has a pump device (12, 14, 16) for transporting a quantity of the second electrolyte (4) into the interior of the container (10), wherein
the container (10), in the area of its wall, has a channel which is filled with the second electrolyte, and into which a body can be pushed in order to convey at least part of the second electrolyte that is located in the channel into the interior of the container,
**characterised in that**
a driving device (15, 16) is provided, which displaces the body (12) towards the interior of the container (10), and that the driving device can be decoupled from the body (12) in order to allow refilling with the second electrolyte (4).

2. Measuring probe (1) according to claim 1, **characterised in that** the body (12) can be pulled back, at least partially, from out of the interior of the container (10), and that a filling channel (19) is provided, through which a quantity of the second electrolyte (4) can be introduced at a side of the body (12) that faces the interior of the container.

3. Measuring probe (1) according to claim 2, **characterised in that** the filling channel (12) runs through the interior of the body.

4. Measuring probe (1) according to claim 2, **characterised in that** the filling channel is formed between the body (12) and the wall of the container (10).

5. Measuring probe (1) according to claim 1, **characterised in that** the body (12) is a piston that slides in a hollow cylinder (23), and that the driving device (15, 16) is formed with a screw (16).

6. Measuring probe (1) according to claim 5, **characterised in that** the axis of the screw (16) runs perpendicular to the axis of the hollow cylinder (23), and that the screw (16) has at its tip a taper (15) on which the piston (12) is supported and which, when it is displaced in the direction of the screw axis (16), causes a displacement of the piston (12), through a wedge action.

7. Measuring probe (1) according to claim 5 and 3, **characterised in that** the filling channel (19) is connected to a feed channel (20) that can be sealed on the outside, through which the second electrolyte (4) can be supplied to the measuring probe.

8. Measuring probe (1) according to one of the preceding claims, **characterised in that** the second electrolyte (4) is a gel.

9. Method for operating a measuring probe (1) according to one of the preceding patent claims, **characterised in that** where necessary, prior to a measurement either a quantity of the second electrolyte (4) is conveyed into the interior of the container (10) or a quantity of the second electrolyte (4) that is located there is displaced, with the result that some of the second electrolyte emerges from the container (10), through the diaphragm opening (9).

## Revendications

1. Sonde de mesure (1) pour mesurer une concentration de porteurs de charge notamment de la valeur ph d'une substance à mesurer ayant une électrode en verre (2) contenant un premier électrolyte (6) et une électrode de mesure (7) ainsi qu'un récipient (10) contenant un second électrolyte (4) en liaison d'une part avec l'électrode en verre (2) et d'autre part avec une électrode de référence (3),
le récipient ayant une ouverture en forme de diaphragme à l'aide de laquelle le second électrolyte (4) peut venir en liaison avec la substance à mesurer,
**caractérisée en ce que**
le récipient comporte une installation de pompage (12, 14, 16) pour transférer une quantité du second électrolyte (4) à l'intérieur du récipient (10),
le récipient (10) ayant au niveau de sa paroi, un canal rempli du second électrolyte dans lequel peut coulisser un organe pour refouler au moins une partie du second électrolyte du canal vers l'intérieur du récipient,
**caractérisée par**
une installation d'entraînement (15, 16) qui produit un coulissement de l'organe (12) à l'intérieur du récipient (10), et
l'installation d'entraînement peut être découplée du corps (12) pour compléter le remplissage du second électrolyte (4).

2. Sonde de mesure (1) selon la revendication 1,
**caractérisée en ce que**
l'organe (12) peut être rétracté, au moins en partie, de l'intérieur du récipient (10), et
un canal de remplissage (19) est prévu qui permet d'introduire une quantité du second électrolyte (4) dans un côté du corps (12) tourné vers l'intérieur du récipient.

3. Sonde de mesure (1) selon la revendication 2,
**caractérisée en ce que**
le canal de remplissage (12) traverse l'intérieur du corps.

4. Sonde de mesure (1) selon la revendication 2,
**caractérisée en ce que**
le canal de remplissage est formé entre le corps (12) et la paroi du récipient (10).

5. Sonde de mesure (1) selon la revendication 1,
**caractérisée en ce que**
le corps (12) est un piston coulissant dans un cylindre creux (23), et l'installation d'entraînement (15, 16) est formée par une vis (16).

6. Sonde de mesure (1) selon la revendication 5,
**caractérisée en ce que**
l'axe de la vis (16) est perpendiculaire à l'axe du cylindre creux (23), et
la vis (16) présente une pointe avec un cône (15) contre lequel s'appuie le piston (12) et dont le coulissement dans la direction de l'axe de la vis (16) produit le coulissement du piston (12) par un effet de coin.

7. Sonde de mesure (1) selon les revendications 5 et 3,
**caractérisée en ce que**
le canal de remplissage (19) est relié à un canal d'alimentation (20) qui peut se fermer de l'extérieur et à travers lequel le second électrolyte (4) peut être fourni à la sonde de mesure.

8. Sonde de mesure (1) selon les revendications précédentes,
**caractérisée en ce que**
le second électrolyte (4) est un gel.

9. Procédé de mise en oeuvre d'une sonde de mesure (1) selon les revendications précédentes,
**caractérisé en ce que**
le cas échéant, avant une mesure, on transfère une quantité du second électrolyte (4) à l'intérieur du récipient (10) ou on refoule une quantité du second électrolyte (4) qui s'y trouve avec pour conséquence qu'une partie du second électrolyte sort du récipient (10) par l'ouverture en forme de diaphragme (9).
